# EUROPEAN PATENT APPLICATION

(11) **EP 4 601 083 A1**
(43) Date of publication of application: **13.08.2025**
(21) Application number: 24865935.1
(22) Date of filing: 10.09.2024
(51) Int. Cl.: H01M 10/6556, H01M 10/613, H01M 10/6554

(54) **HEAT SINK ASSEMBLY**

(30) Priority: 11.09.2023 KR 20230120563
(71) Applicant: LG Energy Solution, Ltd., Seoul 07335 (KR)
(72) Inventor: LEE, Sang Yoon, Daejeon 34122 (KR); SHIN, Ju Hwan, Daejeon 34122 (KR)
(74) Representative: Plasseraud IP
(86) International application number: PCT/KR2024/096129
(87) International publication number: WO 2025/058496

(57) **Abstract**

A heat sink assembly including a heat sink having a plurality of ribs extending in a longitudinal direction of the heat sink, open first and second end faces at respective first and second longitudinal ends and a flow path for a coolant formed by the ribs. The flow path includes an inlet flow path, at least one outlet flow path and a return flow path. A plurality of first end plugs close the first end face. A second end plug closes the second end face. The second end plug includes a flow guide on the return flow path. The flow path is configured so that a coolant introduced from the first longitudinal end flows along the inlet flow path, along the return flow path by the flow guide into the at least one outlet flow path and then flows to the first longitudinal end.

## Description

### [Technical Field]

The present disclosure relates to a heat sink assembly that forms the bottom surface of a battery pack mounting a plurality of secondary batteries, or is mounted on the bottom surface to facilitate heat dissipation of the battery pack.

This application claims the benefit of priority from Korean Patent Application No. 10-2023-0120563, filed on Sep. 11, 2023, the entire contents of which are incorporated herein by reference.

### [Background]

Unlike primary batteries, secondary batteries are rechargeable and have been heavily researched and developed in recent years due to their potential for miniaturization and large capacity. The demand for secondary batteries as an energy source is increasing rapidly due to the increasing technological development and demand for mobile devices, as well as electric vehicles and energy storage systems that are emerging in response to environmental concerns.

Secondary batteries are categorized into coin batteries, cylindrical batteries, prismatic batteries, and pouch-type batteries based on the shape of the battery case. In a secondary battery, the electrode assembly, which is mounted inside the battery case, is a charge and dischargeable power generator consisting of a stacked structure of electrodes and separators.

Since secondary batteries are required to be used continuously for a long period of time, it is necessary to effectively control the heat generated during the charging and discharging process. If the secondary battery is not adequately cooled, the increase in temperature causes an increase in current, which causes an increase in temperature, which in turn causes an increase in current, which in turn causes a positive feedback chain reaction that causes another increase in temperature, eventually leading to the catastrophic condition of thermal runaway.

To effectively dissipate the heat generated by secondary batteries, heat sinks (also called cooling plates) with a coolant flowing through them are widely used. Heat sinks are mounted on the bottom surface of a battery pack mounting a large group of secondary batteries, and perform a cooling function by absorbing the heat generated inside the pack with a coolant and dissipating it to the outside.

Heat sinks can be categorized into brazed heat sinks and extruded heat sinks according to their structure and manufacturing method. A brazed heat sink is a structure in which two plates are brazed together to form a flow path. This structure provides a high degree of freedom in flow path design, but has the disadvantage of poor structural rigidity due to material degradation. On the other hand, an extruded heat sink manufactured as a continuous body through extrusion molding, has an advantage in structural rigidity, but only straight flow paths can be realized. This results in a large number of ports and pipes which uses more space.

### [Summary]

### [Technical Problem]

The present disclosure aims to provide a heat sink assembly that occupies less space by eliminating the need for a separate pipe for flow path formation, and that can improve differential pressure by reducing component count with a simplified flow path configuration.

It is another object of the present disclosure to provide a heat sink assembly capable of absorbing heat evenly over its entire area by uniformly directing the flow of a coolant through a plurality of flow paths.

However, the technical problems that the present disclosure seeks to address are not limited to the problems described above, and other problems not mentioned will be apparent to those of ordinary skill in the art from the description of the disclosure set forth below.

### [Technical Solution]

The present disclosure relates to a heat sink assembly, in one example includes a heat sink having a plurality of integrally molded ribs extending in a longitudinal direction of the heat sink, an open first end face at a first longitudinal end and an open second face at a second longitudinal end, and a flow path for a coolant formed by the plurality of ribs, the flow path including an inlet flow path, at least one outlet flow path and a return flow path transitioning from the inlet flow path to the at least one outlet flow path, a plurality of first end plugs configured to close the first end face, a second end plug configured to close the second end face, the second end plug including a flow guide on the return flow path, wherein the flow path is configured so that a coolant introduced from the first longitudinal end flows along the inlet flow path, is redirected along the return flow path from the second longitudinal end by the flow guide to be introduced into the at least one outlet flow path and then flows to the first longitudinal end .

In addition, the first longitudinal end includes an inlet port through which the coolant flows in and an outlet port through which the coolant flows out.

In addition, the inlet flow path is disposed in a center region of the heat sink and is connected to the inlet port, and the outlet port includes a first outlet port located on a first side of the inlet flow path and a second outlet port located on a second side of the inlet flow path, and the at least one outlet flow path includes a first outlet flow path connected to the first outlet port and a second outlet flow path connected to the second outlet port.

The plurality of first end plugs may include an inlet plug configured to close the inlet flow path at the first endface, and a first outlet plug configured to close the first outlet flow path at the first end face and a second outlet plug configured to close the second outlet flow path at the first end face.

In addition, the flow guide may be a projection protruding from a surface of the second end plug.

In addition, the at least one outlet flow path includes a plurality of outlet flow paths and the flow guide may be disposed face-to-face with respect to a first outlet flow path most adjacent to the inlet flow path, among the plurality of outlet flow paths transitioning from the inlet flow path to the return flow path.

Additionally, the projection of the flow guide may include an inclined surface configured to direct coolant diverted from the inlet flow path to the return flow path toward the first outlet flow path.

In an exemplary embodiment of the present disclosure, the inclined surface of the flow guide may be located between an initial inclination point and a center point along a width direction of the first outlet flow path.

For example, the vertex of the inclined surface may be located at the center point in the width direction of the first outlet flow path.

Furthermore, a space between a surface of the second end plug and an entrance of each of the plurality of outlet flow paths may increase from the first outlet flow path to each outlet flow path of the plurality of outlet floe paths that is progressively spaced from the inlet flow path.

To this end, the distance between the ends of each of the plurality ribs forming the plurality of outlet flow paths and the surface of the second end plug may increase linearly from the first outlet flow path to each outlet flow path of the plurality of outlet flow paths that is progressively spaced from the inlet flow path.

### [Advantageous Effects]

The heat sink assembly of the present disclosure with the above configuration facilitates the configuration of a cooling flow path divided into an inlet and an outlet by machining on both longitudinal ends of the flow path integrally formed in the heat sink, with the end plugs closing the open faces.

Furthermore, the heat sink assembly of the present disclosure is capable of achieving excellent structural rigidity because the heat sink is manufactured as a continuum by extrusion molding.

Furthermore, the heat sink assembly of the present disclosure has flow guides in the return flow path where the coolant flow makes a sharp transition, thereby making the flow rate of coolant introduced into each of the plurality of outlet flow paths more uniform. This allows for uniform cooling performance across the entire area of the heat sink assembly, and significantly reduces the likelihood that secondary batteries located in areas of localized cooling weakness will cause problems such as degradation or thermal runaway.

However, the technical effects of the present disclosure are not limited to those described above, and other effects not mentioned will be apparent to those of ordinary skill in the art from the description of the disclosure set forth below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a heat sink assembly according to one embodiment of the present disclosure.
FIG. 2 is an exploded perspective view of the heat sink assembly in FIG. 1.
FIG. 3 is a drawing detailing the structure of the heat sink.
FIG. 4 is an enlarged view of portion "A" of FIG. 3.
FIG. 5 is an enlarged view of portion "B" of FIG. 3.
FIG. 6 is a drawing illustrating the overall coolant flow in the heat sink assembly of FIG. 1.
FIG. 7 is a drawing illustrating a return flow path according to one embodiment of the present disclosure.

### [Best Mode for Invention]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a heat sink assembly, in one example includes: a heat sink having a plurality of ribs integrally molded along a longitudinal direction of the heat sink and in the heat sink, with open first and second faces at both ends in the longitudinal direction; and first and second end plugs closing the first and second faces of both ends of the heat sink, respectively, wherein the heat sink is provided with: a flow path wherein coolant introduced from the first end plug side flows along an inlet flow path and is redirected along a return flow path from the second end plug side to be introduced into an outlet flow path and then flows to the first end plug side, wherein the second end plug is provided with: a flow guide on the return flow path transitioning from the inlet flow path to the outlet flow path.

The heat sink assembly of the present disclosure with the above configuration facilitates the configuration of a cooling fluid flow path divided into an inlet and an outlet by machining on both longitudinal ends of the flow path integrally formed in the heat sink, with the end plugs closing the open ends.

Furthermore, the heat sink assembly of the present disclosure is capable of achieving excellent structural rigidity because the heat sink is manufactured as a continuous body through extrusion molding.

In addition, heat sink assembly of the present disclosure includes flow guides on the return flow path where the coolant flow makes a sharp transition, thereby making the flow rate of the coolant introduced into each of the plurality of outlet flow paths more uniform. This allows for uniform cooling performance across the entire area of the heat sink assembly, and significantly reduces the likelihood that secondary batteries located in areas of localized cooling weakness will cause problems such as degradation or thermal runaway.

### [Mode for the Invention]

Hereinafter, with reference to the accompanying drawings, a specific embodiment of the heat sink assembly 10 of the present disclosure will be described in detail. For reference, relative positioning designations such as front to back or up and down as used in the following description are intended to aid in the understanding of the disclosure and refer to the orientation shown in the drawings unless otherwise defined.

### [First embodiment]

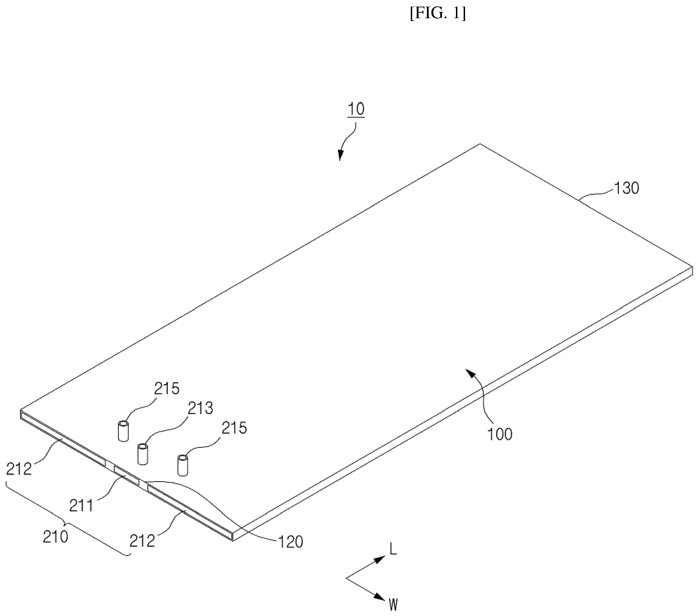

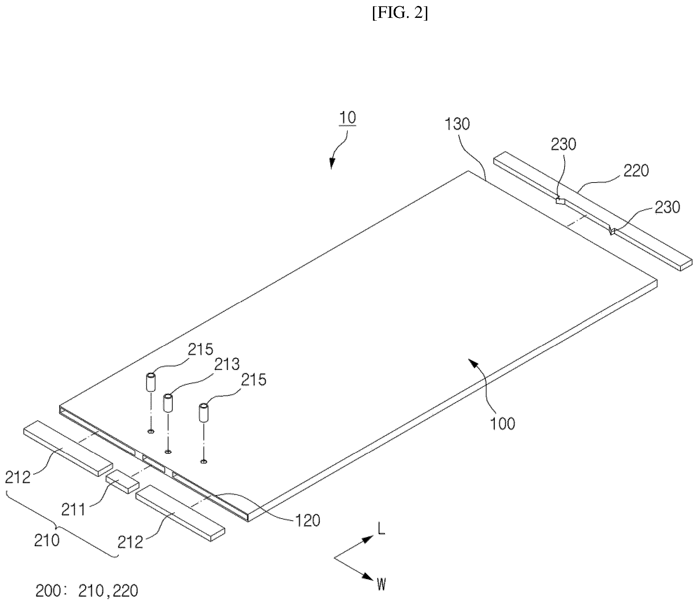

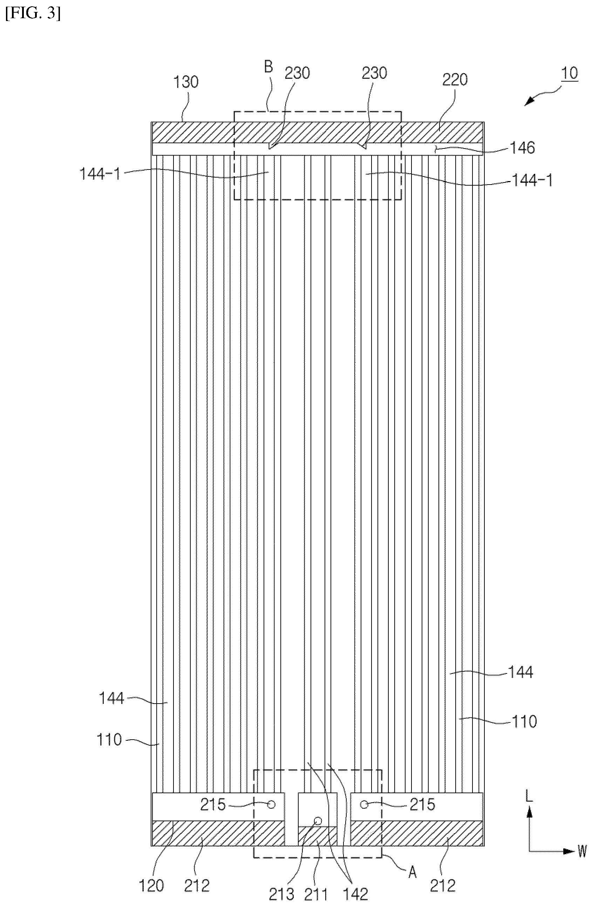

FIG. 1 is a drawing illustrating a heat sink assembly 10 according to one embodiment of the present disclosure, FIG. 2 is an exploded perspective view of the heat sink assembly 10 of FIG. 1, and FIG. 3 is a drawing detailing the structure of the heat sink 100, particularly the structure of flow paths 140.

The heat sink assembly 10 of the present disclosure includes a heat sink 100 having a pair of open faces opposite each other, and first and second end plugs 200. The open faces of the heat sink 100 are faces located on both ends in a longitudinal direction L. For ease of description, the two open faces will be referred to as first face 120 and second face 130, respectively. Here, the longitudinal direction L is defined as referring to the direction in which the plurality of flow paths 140 as hollow parts extend, and the width direction W is defined as referring to a direction orthogonal to the longitudinal direction L in a plane in which the plurality of flow paths 140 is spaced apart.

The plurality of flow paths 140 through which the coolant flows cavities formed along the longitudinal direction L, wherein the flow paths 140 are separated by ribs 110. The first face 120 and the second face 130 at both ends in the longitudinal direction L of the heat sink 100 are open. The heat sink 100 may be manufactured as an extruded article having a plurality of flow paths 140 integrally molded along the longitudinal direction L by extrusion molding. Exemplarily, FIGS. 1 and 2 illustrate a heat sink 100 manufactured by extrusion molding in one embodiment.

The first and second end plugs 200 serve to close the open first and second faces 120 and 130 at each end of the heat sink 100, respectively, and also to organically connect a plurality of flow paths 140 that are separated from each other within the heat sink 100 to form an entering/exiting path for coolant. The coolant entering/exiting paths formed by the first and second end plugs 200 will be described in more detail with reference to FIGS. 3 through 7.

While the embodiment shown herein exemplifies a heat sink 100 having an open structure at both ends in the longitudinal direction L due to the nature of an extrusion-molded article, it would be possible to configure the heat sink assembly 10 of the present disclosure in the same manner of coupling the first and second end plugs 200 if the heat sink 100 were a heat sink 100 having a structure forming an open surface at both ends in the longitudinal direction Lwith a plurality of flow paths 140 extending therefrom.

FIG. 3 more specifically illustrates the structure of the flow paths 140 within the heat sink 100. A plurality of flow paths 140 extending in a longitudinal direction L between the first face 120 and the second face 130, has their ends spaced apart from the first face 120 and the second face 130 by a predetermined distance. The distance at which the flow paths 140 are spaced apart from the first face 120 and the second face 130 can be freely designed by a cutting process that mechanically removes the ribs 110 that compartmentalize the hollow parts between the flow paths 140. Through the cutting process of removing a portion of the ends of the ribs 110, a space (depth) is provided for the end plug 200 to be inserted.

First and second end plugs 200 close the open first face 120 and second face 130 of both ends of the heat sink 100, respectively. The end plugs 200 have a thickness and width suitable for insertion onto the first face 120 and second face 130 of the heat sink 100. Once inserted into the heat sink 100, the end plugs 200 may be sealed and bonded by welding, for example, friction stir welding. For example, if the weld depths of the friction stir welds performed on the upper and lower surfaces of the heat sink 100 are such that they overlap each other, weld faces are formed on the upper, lower, left and right sides of the end plug 200, thereby sealing the heat sink 100 by the end plug 200.

Since the plurality of flow paths 140 extend in the longitudinal direction L, and the first and second end plugs 200 seal the first face 120 and second face 130, coolant can be configured to flow across the entire heat transfer area of the heat sink assembly 10 by properly positioning the ports through which coolant flows in and out. In the embodiment shown, the first face 120 has an inlet port 213 through which coolant flows in and an outlet port 215 through which coolant flows out, while the second face 130 has a second end plug 220 disposed to form a return flow path 146 for coolant without a separate port.

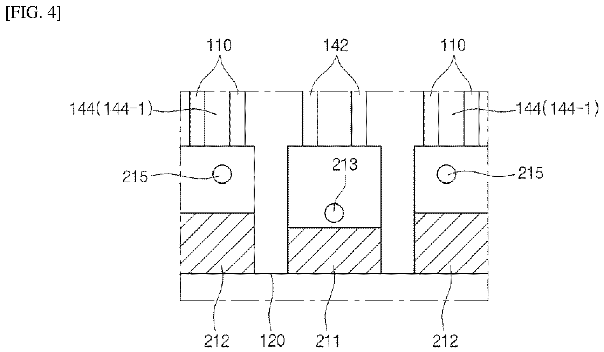

FIG. 4 is an enlarged view of the "A" portion of FIG. 3, which, when viewed in conjunction with FIG. 3, shows an inlet flow path 142 connecting with an inlet port 213 is disposed in a central region of the heat sink 100, and outlet flow paths 144 connecting with paired outlet ports 215 are disposed on both sides of the inlet flow path 142. In the embodiment shown, the inlet flow path 142 is in two pieces, with the ends of the inlet flow path 142 connecting to an elongated return flow path 146 along the second face 130, and the elongated return flow path 146 connecting to the outlet flow paths 144 on both sides.

In one embodiment of the disclosure, the first end plug 210 closing the first face 120 includes an inlet plug 211 closing the first face 120 of the inlet flow path 142, and a pair of outlet plugs 212 closing the first face 120 of the outlet flow path 144. A certain space is formed between the inlet plugs 211 and the entrance of the inlet flow paths 142, and an inlet port 213 is disposed in this space. Accordingly, the coolant flowing into the inlet port 213 fills the space upstream of the inlet flow path 142 and then branches into each inlet flow path 142 to flow evenly. Similarly, an outlet port 215 is disposed in the space formed between the outlet plug 212 and the exit of the outlet flow path 144.

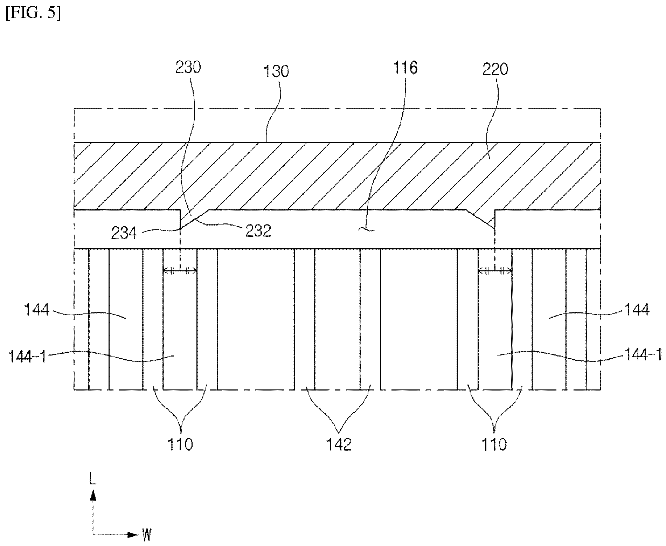

FIG. 5 is an enlarged view of portion "B" of FIG. 3, showing a return flow path 146. The second face 130 of the heat sink 100 is closed by a second end plug 220, and the ends of each of the inlet and outlet flow paths 142, 144, i.e., the exit of the inlet flow path 142 and the entrance of the outlet flow path 144 facing the second face 130, are also spaced apart by a predetermined distance with respect to the second end plug 220, such that the space formed along the second end plug 220 forms the return flow path 146. In the exemplary embodiment of FIG. 5, the return flow path 146 is shown as having a constant distance spaced from the second face 130, i.e., no substantial change in cross-sectional area.

And, as shown specifically in FIG. 5, the second end plug 220 has a flow guide 230 on the return flow path 146 that transitions from the inlet flow path 142 to the outlet flow path 144. In the embodiment shown, the flow guide 230 takes the form of a projection protruding from the surface of the second end plug 220. The role of these flow guides 230 is to ensure a sufficient flow rate of coolant introduced into the outlet flow path 144 closest to the inlet flow path 142, i.e. the first outlet flow path 144-1.

Coolant exiting the exit of the inlet flow path 142, after impinging on the second end plug 220, is sharply redirected into the return flow paths 146 on both sides. The coolant diverted into the return flow paths 146 flows sequentially into the entrance of each of the outlet flow paths 144 arranged in succession, starting with the first outlet flow path 144-1. Ideally, the flow rate of coolant introduced into each outlet flow path 144 would be uniform, but in practice it is not.

In particular, the problem is that the flow rate of coolant introduced into the first outlet flow path 144-1 closest to the inlet flow path 142 drops significantly. Coolant flow in the vicinity of the first outlet flow path 144-1 is most unstable, as it is immediately after the coolant flow has been diverted by nearly 90° upon hitting the second end plug 220. Due to this unstable flow pattern, there is a tendency for insufficient coolant to be introduced into the first outlet flow path 144-1. In more severe cases, the pressure drop caused by the strong turbulent flow can cause coolant backflow in the first outlet flow path 144-1.

The flow guide 230, provided in the second end plug 220, is intended to solve the flow distribution problem, in particular to facilitate the coolant flow towards the first outlet flow path 144-1, which is the most under-flowed and unstable. To this end, the flow guide 230 is disposed face-to-face with respect to the first outlet flow path 144-1 closest to the inlet flow path 142, in the path transitioning from the inlet flow path 142 to the return flow path 146. By the flow guide 230 disposed face-to-face at the entrance of the first outlet flow path 144-1, a portion of the coolant diverted toward the return flow path 146 is forced to flow toward the first outlet flow path 144-1 after striking the flow guide 230.

For effective coolant redirection, the flow guide 230 may include an inclined surface 232 that guides coolant redirected from the inlet flow path 142 to the return flow path 146 toward the first outlet flow path 144-1. And, the inclined surface 232 of the flow guide 230 may be disposed between an initial and a center point along the width direction W of the first outlet flow path 144-1 to facilitate the flow of coolant redirected toward the first outlet flow path 144-1 into the first outlet flow path 144-1. For example, as shown in the partially enlarged view of FIG. 5, the vertex 234 of the inclined surface 232 of the flow guide 230 may be located at a central point along the width direction W of the first outlet flow path 144-1. By directing the flow of coolant toward the first outlet flow path 144-1 toward the center of the entrance of the first outlet flow path 144-1, an effective inflow of coolant may be facilitated.

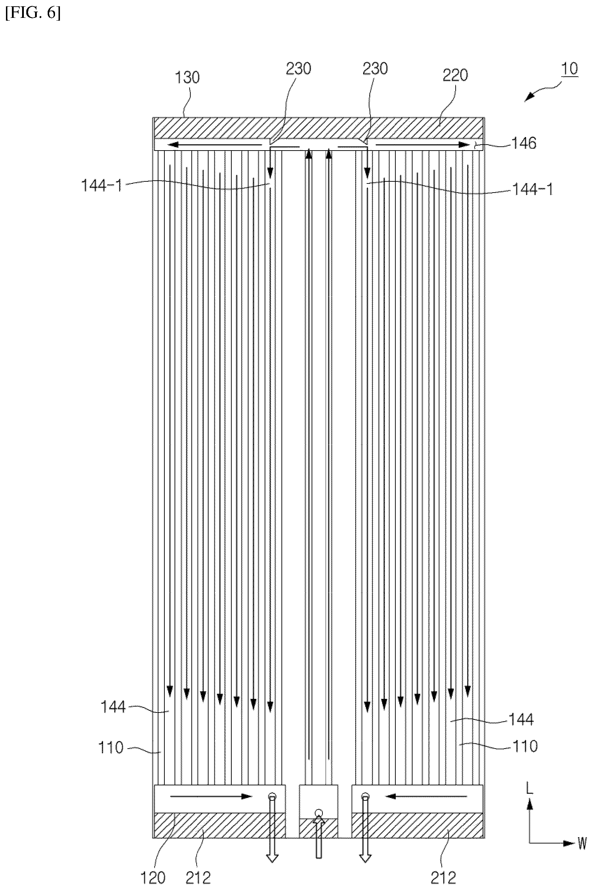

FIG. 6 is a drawing illustrating overall coolant flow in the heat sink assembly 10 of FIG. 1. As mentioned above, on the first face 120 of the heat sink 100, an inlet flow path 142 connecting with an inlet port 213 is disposed in a central region of the heat sink 100, and outlet flow paths 144 connecting with paired outlet ports 215 are disposed on both sides of the inlet flow path 142. Further, on the second face 130 of the heat sink 100, a second end plug 220 forms a return flow path 146.

Due to this arrangement of the flow paths 140, the coolant introduced into the inlet port 213 on the first end plug 210 side flows along the center inlet flow path 142 and is redirected along the return flow path 146 on the second end plug 220 side. The redirected coolant flows along the return flow path 146 and is introduced into the outlet flow path 144 in turn, and the coolant flowing along the outlet flow path 144 exits through the outlet port 215 on the first end plug 210 side.

And, as the coolant flowing through the return flow path 146 is introduced into each of the outlet flow paths 144, a flow guide 230 provided in the second end plug 220 ensures that the first outlet flow path 144-1, which was the most deficient in coolant inflow, has a good flow rate. With the help of the flow guide 230, the flow rate of coolant through each outlet flow path 144 is more uniform than before, and the coolant flows at a uniform flow rate over the entire area of the heat sink 100, resulting in uniform cooling characteristics that are not biased toward a particular area.

### [Second embodiment]

In the first embodiment, the disclosure is described in terms of a configuration of a second end plug 220 for ensuring flow to a first outlet flow path 144-1, where reverse flow of coolant in the return flow path 146 may occur. In the second embodiment, additional configurations are described that may result in a more even flow rate of coolant introduced into each outlet flow path 144.

Coolant flowing through the return flow path 146 is distributed sequentially into a plurality of outlet flow paths 144, starting with the first outlet flow path 144-1. Since the flow rate of coolant exiting the exit of the inlet flow path 142 is approximately constant, the flow characteristics of the first outlet flow path 144-1 are such that the flow of coolant into the first outlet flow path 144 is not smooth, but the flow rate of coolant tends to decrease toward the downstream side of the return flow path 146 as the coolant is first distributed to the outlet flow paths 144 adjacent to the inlet flow path 142. The second embodiment is directed to a configuration for eliminating or mitigating this uneven distribution of flow.

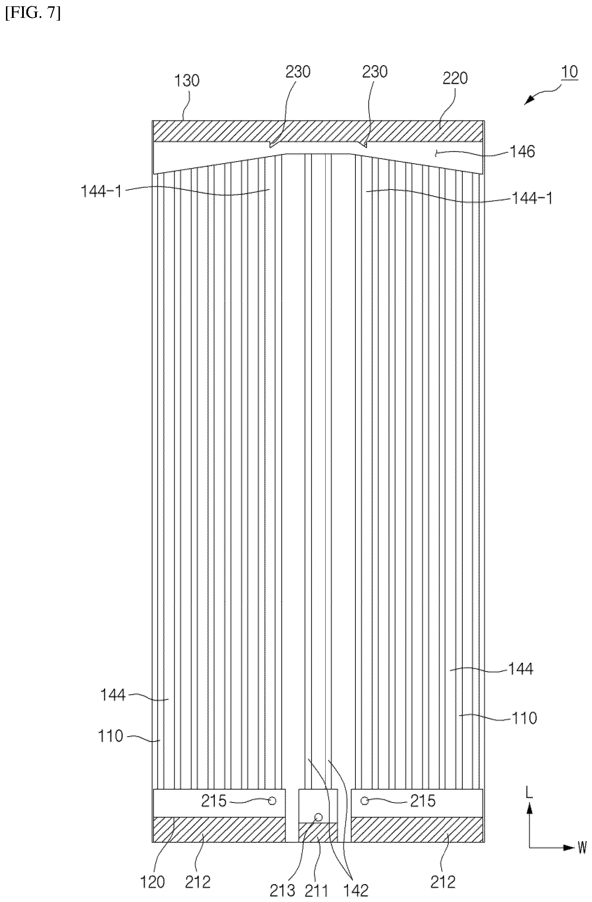

FIG. 7 is a drawing illustrating a return flow path 146 according to a second embodiment. Referring to FIG. 7, the space between the surface of the second end plug 220 and the entrance of each of the outlet flow paths 144 is configured to widen, starting at the first outlet flow path 144-1 and progressing to the outlet flow paths 144 that are progressively spaced apart from the inlet flow path 142. The space between the surface of the second end plug 220 and the entrance of each outlet flow path 144 is determined by the length of the rib 110 on the second face 130 forming the entrance of the outlet flow path 144. That is, the configuration of FIG. 7 can be realized by adjusting the depth of cut for the end of the rib 110 of the outlet flow path 144 being mechanically processed through the second face 130.

In the embodiment shown, the distance between the ends of the ribs 110 forming each outlet flow path 144 and the surface of the second end plug 220 increases linearly from the first outlet flow path 144-1 outwardly to the outlet flow paths 144. By linearly increasing the distance between the end of the rib 110 and the surface of the second end plug 220, the space between the surface of the second end plug 220 and the entrance of each outlet flow path 144 expands linearly with increasing distance from the inlet flow path 142.

By this configuration, when the space between the surface of the second end plug 220 and the inlet of each outlet flow path 144 is narrow, a smaller amount of coolant is introduced into the outlet flow path 144 for a faster flow rate, while when the space is wider, a sufficient amount of coolant is introduced into the outlet flow path 144 for a longer period of time for a slower flow rate.

Thus, by ensuring flow to the first outlet flow path 144-1 by the flow guide 230 of the second end plug 220, and also by instantiating a differential flow distribution that considers the distance from the outlet of the inlet flow path 142, the flow distributed to the entire outlet flow path 144 becomes more uniform, which allows the cooling performance of the heat sink assembly 10 to be even over its entire area.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

### [Description of Reference Numerals]

10: HEAT SINK ASSEMBLY
100: HEAT SINK
110: RIB
120: FIRST FACE
130: SECOND FACE
140: FLOW PATH
142: INLET FLOW PATH
144: OUTLET FLOW PATH
144-1: FIRST OUTLET FLOW PATH
146: RETURN FLOW PATH
200: END PLUG
210: FIRST END PLUG
211: INLET PLUG
212: OUTLET PLUG
213: INLET PORT
215: OUTLET PORT
220: SECOND END PLUG
230: FLOW GUIDE
232: INCLINED SURFACE
234: VERTEX
L: LONGITUDINAL DIRECTION
W: WIDTH DIRECTION

## Claims

1. A heat sink assembly comprising:
a heat sink including:
a plurality of integrally molded ribs extending in a longitudinal direction of the heat sink;
an open first end face at a first longitudinal end; and
an open second end face at a second longitudinal end; and
a flow path for a coolant formed by the plurality of ribs, the flow path including an inlet flow path, at least one outlet flow path and a return flow path transitioning from the inlet flow path to the at least one outlet flow path;
a plurality of first end plugs configured to close the first end face;
a second end plug configured to close the second end face, the second end plug including a flow guide on the return flow path,
wherein the flow path is configured so that a coolant introduced from the first longitudinal end flows along the inlet flow path, is redirected along the return flow path from the second longitudinal end by the flow guide to be introduced into the at least one outlet flow path and then flows to the first longitudinal end

2. The heat sink assembly of claim 1, wherein
the first longitudinal end includes an inlet port through which the coolant flows in and an outlet port through which the coolant flows out.

3. The heat sink assembly of claim 2, wherein
the inlet flow path is disposed in a center region of the heat sink and is connected to the inlet port, and
the outlet port includes a first outlet port located on a first side of the inlet flow path and a second outlet port located on a second side of the inlet flow path, and the at least one outlet flow path includes a first outlet flow path connected to the first outlet port and a second outlet flow path connected to the second outlet port.

4. The heat sink assembly of claim 3, wherein the plurality of first end plugs comprise:
an inlet plug configured to close the inlet flow path at the first end face; and
a first outlet plug configured to close the first outlet flow path at the first end face and a second outlet plug configured to close the second outlet flow path at the first end face.

5. The heat sink assembly of claim 1, wherein
the flow guide is a projection protruding from a surface of the second end plug.

6. The heat sink assembly of claim 5, wherein
the at least one outlet flow path includes a plurality of outlet flow paths and the flow guide is disposed face-to-face with respect to a first outlet flow path most adjacent to the inlet flow path, among the plurality of outlet flow paths transitioning from the inlet flow path to the return flow path.

7. The heat sink assembly of claim 6, wherein
the projection of the flow guide includes an inclined surface configured to direct coolant diverted from the inlet flow path to the return flow path toward the first outlet flow path.

8. The heat sink assembly of claim 4, wherein
the inclined surface of the flow guide is located between an initial inclination point and a center point along a width direction of the first outlet flow path.

9. The heat sink assembly of claim 8, wherein
the vertex of the inclined surface is located at the center point in the width direction of the first outlet flow path.

10. The heat sink assembly of claim 6, wherein
a space between a surface of the second end plug and an entrance of each of the plurality of outlet flow paths increases from the first outlet flow path to each outlet flow path of the plurality of outlet flow paths that is progressively spaced from the inlet flow path.

11. The heat sink assembly of claim 10, wherein
the distance between the ends of each of the plurality the ribs forming the plurality of outlet flow paths and the surface of the second end plug increases linearly from the first outlet flow path to each outlet flow path of the plurality of outlet flow paths that is progressively spaced from the inlet flow path.
